# EUROPEAN PATENT APPLICATION

(11) **EP 4 686 212 A1**
(43) Date of publication of application: **28.01.2026**
(21) Application number: 25190368.8
(22) Date of filing: 18.07.2025
(51) Int. Cl.: H04N 23/13, H04N 23/45

(54) **CONTROL APPARATUS, CONTROL METHOD, AND COMPUTER PROGRAM**

(30) Priority: 23.07.2024 JP 2024117963
(71) Applicant: CANON KABUSHIKI KAISHA, Tokyo 146-8501 (JP)
(72) Inventor: KANEKO, Seigo, Tokyo, 146-8501 (JP)
(74) Representative: TBK

(57) **Abstract**

A control apparatus comprises a display means configured to display a first image or a second image output from a first image capturing means including a first visible light image capturing means and a first invisible light image capturing means, and a third image or a fourth image output from a second image capturing means including a second visible light image capturing means and a second invisible light image capturing means; and a display control means configured to switch from the first image to the second image and switching from the third image to the fourth image different from the third image based on a first instruction to switch from the first image to the second image different from the first image in a case where the first image and the third image are displayed.

## Description

### TECHNICAL FIELD

The present disclosure relates to a control apparatus, an image capturing apparatus, an image capturing system, a control method, and a computer program.

### TECHNICAL FIELD

In a known technique, a moving body such as a drone movable in response to wireless operation includes an image capturing apparatus. The image capturing apparatus captures an operation image of a drone operator and a surrounding image of the drone. In order for the operator to remotely operate the drone, a client apparatus that displays an image captured by the image capturing apparatus of the drone is used. The operator can remotely operate the drone while watching the image displayed on the client apparatus. The drone can be mounted with a plurality of image capturing units in order to capture different imaging regions. Furthermore, the plurality of image capturing units include a visible light image capturing unit and an invisible light image capturing unit (thermal camera or the like) so that image capturing can be performed even in a poor field of view environment such as fog or haze.

For example, Japanese Patent Laid-Open No. 2019-1325 proposes an in-vehicle image capturing apparatus that selects output of any of a visible image of a visible light camera mounted on a vehicle or an infrared image of a thermal camera based on distance information between the vehicle and a subject.

### SUMMARY

According to the present disclosure, display switching of a plurality of images can be easily performed.

The present disclosure in its first aspect provides a control apparatus as specified in claim 1. Optional features are specified in claim 2 to 16.

The present disclosure in its second aspect provides a control method as specified in claim 17.

The present disclosure in its third aspect provides a computer program as specified in claim 18.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a functional block diagram of an image capturing system according to a first embodiment.
FIG. 2 is a hardware configuration diagram of the image capturing apparatus according to the first embodiment.
FIG. 3 is a hardware configuration diagram of a client apparatus according to the first embodiment.
FIG. 4 is an appearance view of a drone mounted with the image capturing apparatus according to the first embodiment.
FIG. 5 is an appearance view of the client apparatus according to the first embodiment.
FIG. 6 is a functional block diagram of the drone mounted with the image capturing apparatus according to the first embodiment.
FIG. 7 is a state diagram illustrating a relationship between an output of a first image capturing unit and an output of a second image capturing unit according to the first embodiment.
FIG. 8 is a view illustrating an appearance of a display 401 in a state A according to the first embodiment.
FIG. 9 is a view illustrating an appearance of the display 401 in a state B according to the first embodiment.
FIG. 10 is a view illustrating an appearance of the display 401 in a state C according to the first embodiment.
FIG. 11 is a view illustrating an appearance of the display 401 in a state D according to the first embodiment.
FIG. 12 is a flowchart showing processing executed by the client apparatus according to the first embodiment.
FIG. 13 is a state transition diagram of a display according to the first embodiment.
FIG. 14 is a flowchart showing processing executed by the client apparatus according to a second embodiment.
FIG. 15 is a state transition diagram of a display according to the second embodiment.
FIG. 16 is an example of simultaneously displaying two types of images in a display area 802 according to a fourth embodiment.
FIG. 17 is a view illustrating a user interface for performing image switching in the display area 802 according to the fourth embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

### Image Capturing System

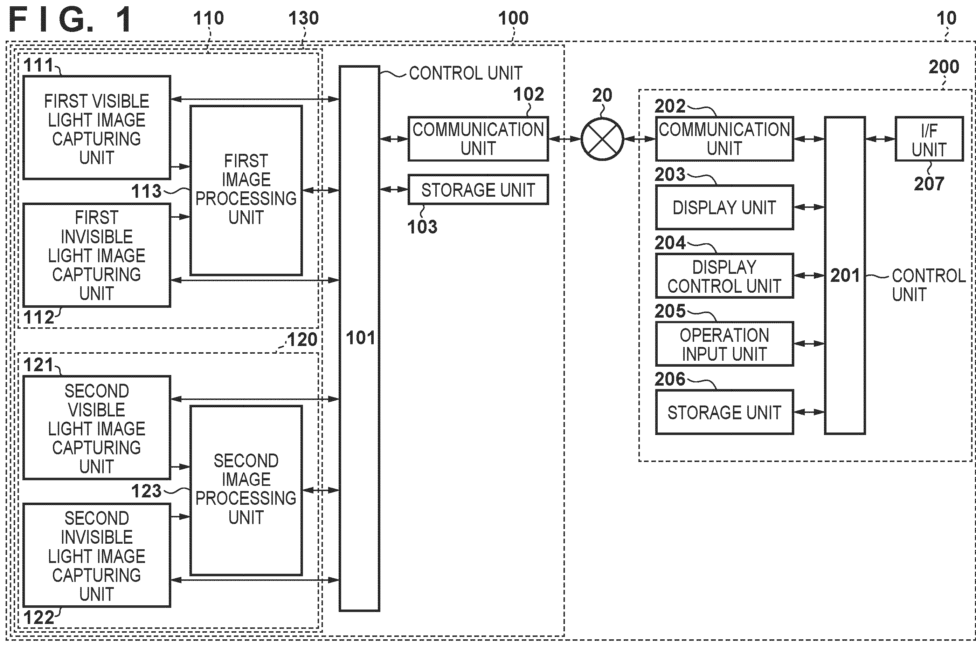

FIG. 1 is a functional block diagram of the image capturing system according to the first embodiment.

The image capturing system 10 includes an image capturing apparatus 100, a client apparatus 200, and a network 20. The image capturing apparatus 100 and the client apparatus 200 are connected by the wireless or wired network 20.

### Image Capturing Apparatus

The image capturing apparatus 100 includes a control unit 101, a communication unit 102, a storage unit 103, and an image capturing unit 130. The image capturing unit 130 includes a first image capturing unit 110 and a second image capturing unit 120.

The first image capturing unit 110 includes a first visible light image capturing unit 111 and a first invisible light image capturing unit 112.

A first image processing unit 113 converts, into image data, signals photoelectrically converted by the first visible light image capturing unit 111 and the first invisible light image capturing unit 112.

The second image capturing unit 120 includes a second visible light image capturing unit 121 and a second invisible light image capturing unit 122.

A second image processing unit 123 converts, into image data, signals photoelectrically converted by the second visible light image capturing unit 121 and the second invisible light image capturing unit 122.

The image capturing apparatus 100 can switch an image to be displayed on a display unit 203 described later by controlling outputs of the first image processing unit 113 and the second image processing unit 123. The image capturing apparatus 100 can switch an image to be displayed on the display unit 203 by controlling (outputting/stopping) the operation of the four image capturing units (the first visible light image capturing unit 111, the first invisible light image capturing unit 112, the second visible light image capturing unit 121, and the second invisible light image capturing unit 122).

The first visible light image capturing unit 111 and the second visible light image capturing unit 121 include an imaging optical system and an imaging element. The imaging optical system includes a zoom lens, a focus lens, and an aperture mechanism, and condenses light from a subject onto a light-receiving surface of the imaging element. The zoom lens can move in an optical axis direction and change an imaging magnification. The focus lens can move in the optical axis direction and adjust the focus. The aperture mechanism can adjust the amount of light passing through the optical system. Each of the lenses and the aperture mechanism has a driving unit. Each of the lenses and the aperture mechanism is controlled by the control unit 101. The imaging element includes a semiconductor element such as a complementary metal oxide semiconductor (CMOS) sensor or a charge coupled device (CCD) sensor. Based on light incident from the imaging optical system, the imaging element photoelectrically converts a subject image to generate an image signal that is an analog signal. Pixel data output from the first visible light image capturing unit 111 and the second visible light image capturing unit 121 are transmitted to the first image processing unit 113 and the second image processing unit 123 and subjected to signal processing.

The first invisible light image capturing unit 112 and the second invisible light image capturing unit 122 include the imaging optical system and the imaging element. The imaging optical system includes a zoom lens, a focus lens, and an aperture mechanism, and condenses light from a subject onto a light-receiving surface of the imaging element. The zoom lens can move in an optical axis direction and change an imaging magnification. The focus lens can move in the optical axis direction and adjust the focus. The aperture mechanism can adjust the amount of light passing through the optical system. Each of the lenses and the aperture mechanism has a driving unit. Each of the lenses and the aperture mechanism is controlled by the control unit 101. The imaging element includes an infrared sensor sensitive to infrared such as near-infrared, mid-infrared, and far-infrared. Based on light incident from the imaging optical system, the imaging element photoelectrically converts a subject image to generate an image signal that is an analog signal. Pixel data output from the first invisible light image capturing unit 112 and the second invisible light image capturing unit 122 are transmitted to the first image processing unit 113 and the second image processing unit 123 and subjected to signal processing. Here, an example in which the imaging element includes the infrared sensor has been described, but the imaging element may be an imaging element sensitive to wavelengths other than visible light, such as an ultraviolet sensor.

In the first image processing unit 113 and the second image processing unit 123, pixel data are converted into digital signals by A/D conversion. The converted digital signal is converted into image data through correction processing such as black level correction, gamma curve adjustment, temperature correction, flaw correction, noise reduction, and white balance correction, and development processing. Data compression processing such as MP4 and JPEG methods is performed. The first image processing unit 113 and the second image processing unit 123 perform correction in accordance with the wavelength characteristics of each imaging element.

The control unit 101 integrally controls each component of the image capturing apparatus 100, and executes setting of various parameters and data transmission and reception instructions. The control unit 101 is an output control means for controlling the operation of each image capturing unit. The control unit 101 controls the operation (output/stop) of each image capturing unit included in each of the first image capturing unit 110 and the second image capturing unit 120 based on, for example, an instruction (also called a first instruction) to switch an image in a display area 801 described later received via the communication unit 102.

The communication unit 102 is an output means for transmitting, to the client apparatus 200 via the network 20, image data output from the first image processing unit 113 and the second image processing unit 123. The communication unit 102 receives operation information input from an operation input unit 205 of the client apparatus 200.

The storage unit 103 can store and read image data output from the first image processing unit 113 and the second image processing unit 123. Furthermore, the storage unit 103 is used as a storage area for a program executed by the control unit 101 described later, a storage area for various parameters, and a work area during execution of the program.

### Client Apparatus

The client apparatus 200 includes a control unit 201, a communication unit 202, the display unit 203, a display control unit 204, the operation input unit 205, a storage unit 206, and an I/F unit 207. The client apparatus 200 is a control apparatus that performs display switching of a plurality of images.

The display unit 203 is controlled by the display control unit 204. The display unit 203 is a display means (e.g., a display) for displaying images captured by the two image capturing units (the first image capturing unit 110 and the second image capturing unit 120) and various types of information. The display unit 203 is, for example, an LCD display, an organic EL display, or a touch panel.

The display control unit 204 is a display control means for controlling display of an image displayed on the display unit 203. The display control unit 204 selects an image and information to be displayed on the display unit 203, controls a display format (superimposition, split screen, and the like), and controls a display area of each image and information. Based on an instruction by the operator, the display control unit 204 may change the image and information to be displayed on the display unit 203, the display format, and the display area. The display control unit 204 can switch the display format (visible image and invisible image) of the image to be displayed on the display unit 203.

The operation input unit 205 includes a controller (not illustrated) and a touch panel (not illustrated). The operation input unit 205 is an input means for inputting a user instruction to the image capturing apparatus 100 and the client apparatus 200. The user can control the image capturing apparatus 100 and the client apparatus 200 by operating the controller and/or the touch panel.

The storage unit 206 can temporarily store and read the image data output from the first image capturing unit 110 and the second image capturing unit 120 received by the communication unit 202 and the display data generated by the display control unit 204. Furthermore, the storage unit 206 is used as a storage area for a program executed by the control unit 201, a storage area for various parameters, and a work area during execution of the program.

The I/F unit 207 is an interface for connecting the client apparatus 200 to a personal computer (PC) not illustrated, a storage medium (e.g., a hard disk, a memory card, an SD card, a USB memory, or the like) not illustrated, and an external display device not illustrated.

The control unit 201 integrally controls each component of the client apparatus 200. The control unit 201 is a system control unit that performs setting of various parameters, display control, and data transmission and reception instructions.

### Hardware Configuration of Image Capturing Apparatus

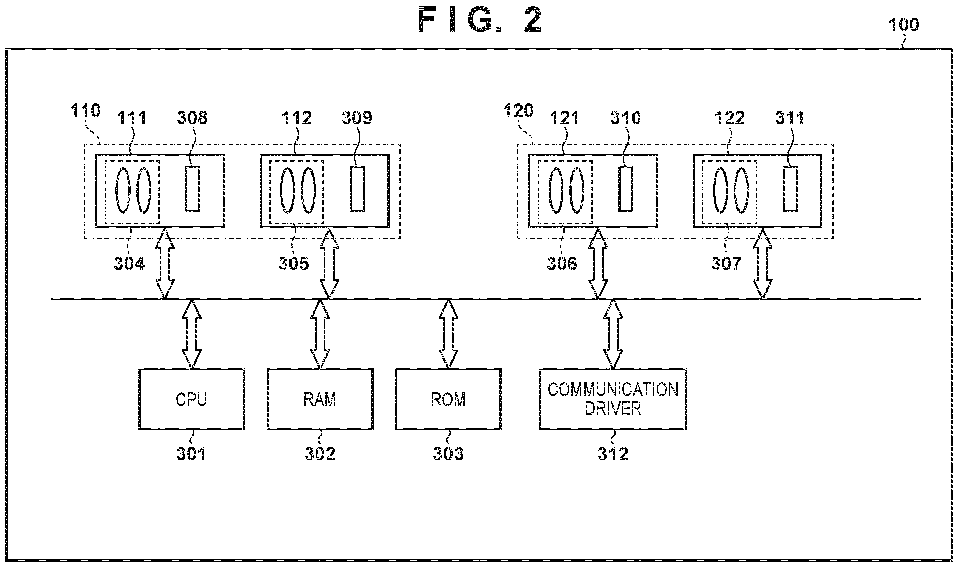

FIG. 2 is a hardware configuration diagram of the image capturing apparatus according to the first embodiment.

The image capturing apparatus 100 includes a CPU 301, a RAM 302, a ROM 303, the first image capturing unit 110, the second image capturing unit 120, and a communication driver 312. The CPU 301 is a central arithmetic processing unit. The CPU 301 controls the control unit 101, the first image processing unit 113, and the second image processing unit 123 of FIG. 1. Furthermore, the CPU 301 integrally controls each function. The RAM 302 is a volatile memory and is a component of the storage unit 103 of FIG. 1. The ROM 303 is a nonvolatile memory, and is a component of the storage unit 103 of FIG. 1.

The first image capturing unit 110 includes the first visible light image capturing unit 111 and the first invisible light image capturing unit 112. The first visible light image capturing unit 111 includes a visible light lens 304 with high visible light transmittance and a visible light imaging element 308 sensitive to visible light. The first invisible light image capturing unit 112 includes an invisible light lens 305 with high invisible light transmittance and an invisible light imaging element 309 sensitive to invisible light.

The second image capturing unit 120 includes the second visible light image capturing unit 121 and the second invisible light image capturing unit 122. The second visible light image capturing unit 121 includes a visible light lens 306 with high visible light transmittance and a visible light imaging element 310 sensitive to visible light. The second invisible light image capturing unit 122 includes an invisible light lens 307 with high invisible light transmittance and an invisible light imaging element 311 sensitive to invisible light.

The communication driver 312 is a component of the communication unit 102 of FIG. 1. The communication driver 312 is a driver for the image capturing apparatus 100 to communicate with another apparatus such as the client apparatus 200.

### Hardware Configuration of Client Apparatus

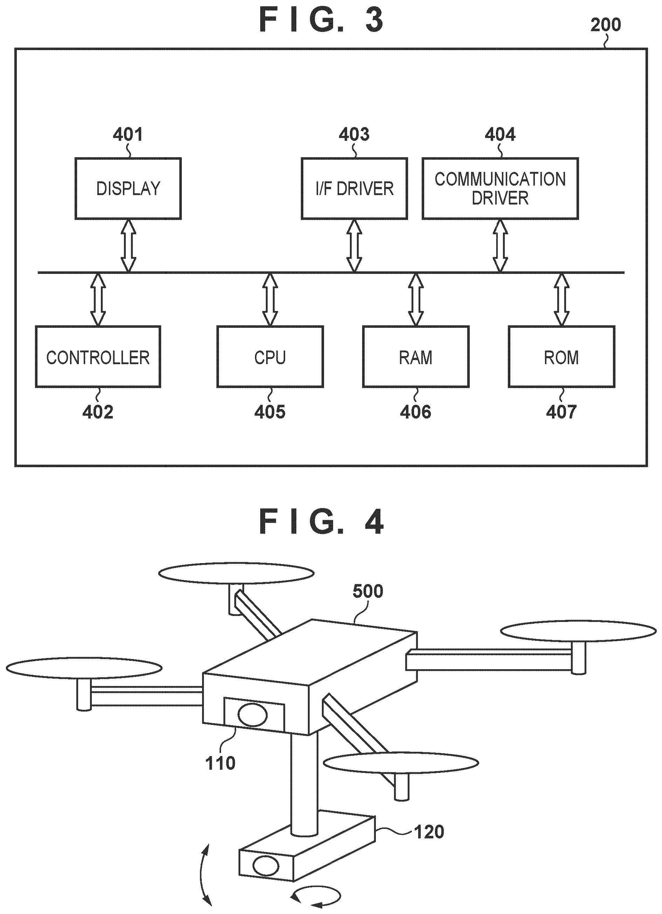

FIG. 3 is a hardware configuration diagram of the client apparatus according to the first embodiment.

The client apparatus 200 includes a display 401, a controller 402, an I/F driver, a communication driver 404, a CPU 405, a RAM 406, and a ROM 407.

The display 401 is a component of the display unit 203 of FIG. 1. The image captured by the two image capturing units (the first image capturing unit 110 and the second image capturing unit 120) and various types of information are displayed on the display 401.

The controller 402 is a component of the operation input unit 205 of FIG. 1. The controller 402 operates the image capturing apparatus 100, changes display setting of the client apparatus 200, and the like.

The I/F driver 403 is a component of the I/F unit 207 of FIG. 1. The I/F driver 403 performs format conversion in accordance with a connection standard when the client apparatus 200 is connected to an external device by wire.

The communication driver 404 is a driver for wireless communication constituting the communication unit 202 of FIG. 1.

The CPU 405 is a central arithmetic processing unit. The CPU 405 performs not only the role of the control unit 201 of FIG. 1 but also control of each functional unit. Furthermore, the CPU 405 integrally controls each functional unit. The RAM 406 is a volatile memory and is a component of the storage unit 206 of FIG. 1. The ROM 407 is a nonvolatile memory and is a component of the storage unit 206 of FIG. 1.

FIG. 4 is an appearance view of the drone mounted with the image capturing apparatus according to the first embodiment.

A drone 500 includes the first image capturing unit 110 and the second image capturing unit 120, which are components of the image capturing apparatus 100. The drone 500 of FIG. 4 includes two image capturing units, but may include three or more image capturing units. The first image capturing unit 110 and the second image capturing unit 120 can be attached to any positions of the drone 500.

The first image capturing unit 110 is an image capturing unit that is fixed (mounted) to the front surface of the drone 500 and captures a wider angle than the second image capturing unit 120. The first image capturing unit 110 is attached to the image capturing apparatus 100 so that it can capture an image with a fixed field angle. The operator of the drone 500 can pilot the drone 500 while watching the image captured by the first image capturing unit 110. The first visible light image capturing unit 111 and the first invisible light image capturing unit 112 of the first image capturing unit 110 capture images in the same direction in which at least a part of imaging regions overlap. The focal lengths of the first visible light image capturing unit 111 and the first invisible light image capturing unit 112 are desirably the same, but the focal lengths of the first visible light image capturing unit 111 and the first invisible light image capturing unit 112 are not necessarily the same. The zoom magnification of the first visible light image capturing unit 111 and the zoom magnification of the first invisible light image capturing unit 112 can be changed independently of each other.

The second image capturing unit 120 is an image capturing unit attachable to a lower portion of the drone 500. The second image capturing unit 120 is an image capturing unit that performs telephoto image capturing of the surrounding environment of the drone 500. The second image capturing unit 120 can capture an image with a more telephoto field angle than the first image capturing unit 110. The field angle (zoom magnification) of the second image capturing unit 120 can be changed according to the distance to the subject and the direction. Since the second image capturing unit 120 includes a drive mechanism for changing the image direction, it can perform pan and tilt drive. The pan and tilt drive of the second image capturing unit 120 can be controlled by the drone 500 or the image capturing apparatus 100. The second visible light image capturing unit 121 and the second invisible light image capturing unit 122 of the second image capturing unit 120 capture images in the same direction in which at least a part of imaging regions overlap. The focal lengths of the second visible light image capturing unit 121 and the second invisible light image capturing unit 122 are desirably the same, but the focal lengths of the second visible light image capturing unit 121 and the second invisible light image capturing unit 122 are not necessarily the same. The zoom magnification of the second visible light image capturing unit 121 and the zoom magnification of the second invisible light image capturing unit 122 can be changed independently of each other.

An example in which the first image capturing unit 110 of the image capturing apparatus 100 is attached to the drone 500 and the second image capturing unit 120 is attached to a position apart downward from the drone 500 has been described. However, the first image capturing unit 110 and the second image capturing unit 120 may be integrally attached to the drone 500.

An example in which the image capturing apparatus 100 is mounted on the drone 500 has been described, but the present disclosure is not limited to this. For example, the image capturing apparatus 100 may be mounted on any moving body such as an unmanned/manned aircraft, a ship, and a vehicle.

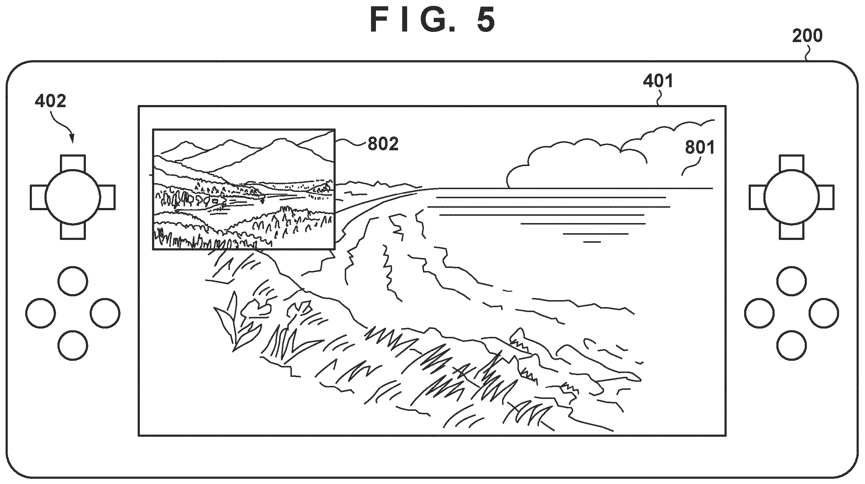

FIG. 5 is an appearance view of the client apparatus according to the first embodiment.

The display 401 of the client apparatus 200 includes the display area 801 that is main for displaying an image captured by the first image capturing unit 110 and the display area 802 that is sub for displaying an image (for surrounding information confirmation) captured by the second image capturing unit 120. The display area 802 is superimposed on the display area 801. FIG. 5 illustrates a configuration in which the controller 402, the display 401, and the client apparatus 200 are integrated, but a configuration in which the controller 402, the display 401, and the client apparatus 200 are independent of one another may be adopted. The touch panel may have a function of the operation input unit 205. Here, an example of superimposing the display area 802 on the display area 801 will be described. However, the display area 801 may be provided in the right half of the display 401, and the display area 802 may be provided in the left half of the display 401. The size and arrangement of the two display areas (the display area 801 and the display area 802) can be arbitrarily changed.

### Drone 500

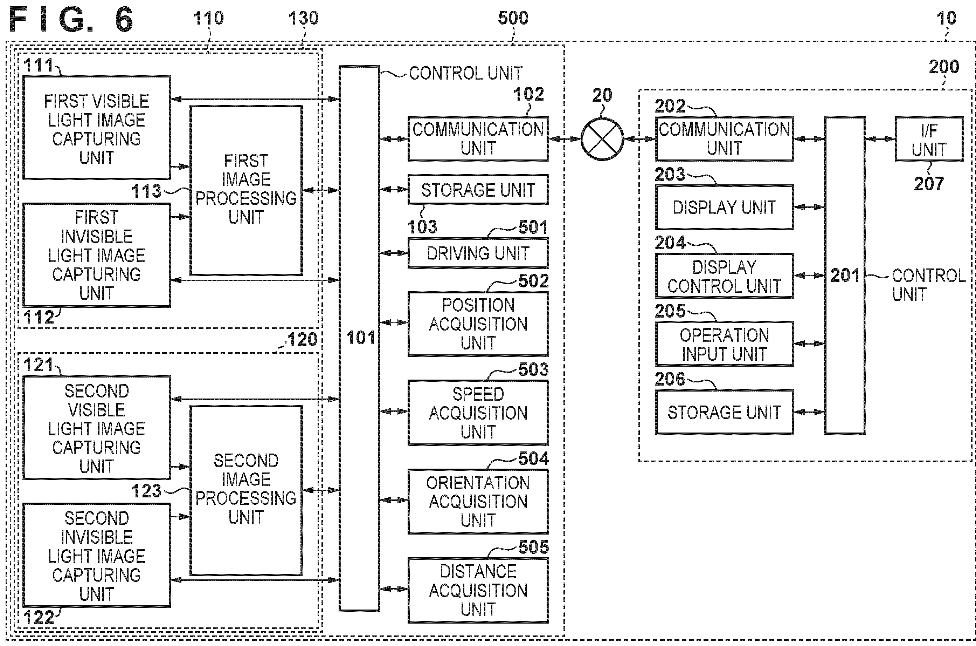

FIG. 6 is a functional block diagram of the drone mounted with the image capturing apparatus according to the first embodiment.

Since the drone 500 has the function of the image capturing apparatus 100 of FIG. 1, the description of the content overlapping with FIG. 1 will be omitted. The drone 500 includes a driving unit 501, a position acquisition unit 502, a speed acquisition unit 503, an orientation acquisition unit 504, and a distance acquisition unit 505.

The driving unit 501 is a mechanism unit including a motor and a propeller for performing navigation and orientation control of the drone 500. The drone 500 can move back and forth, right and left, and up and down. The driving unit 501 is controlled by the control unit 101 based on the operation information of the operation input unit 205 received via the communication unit 102 and the information obtained from the position acquisition unit 502, the speed acquisition unit 503, the orientation acquisition unit 504, and the distance acquisition unit 505. The driving unit 501 controls pan and tilt drive of the second image capturing unit 120.

The position acquisition unit 502 receives a global positioning system (GPS) signal. The position acquisition unit 502 identifies the position of the drone 500 by processing the GPS signal, and identifies the direction of the drone 500 by processing a signal of an electronic compass.

The speed acquisition unit 503 processes digital data output from an acceleration sensor or the like, and calculates the acceleration and the speed of the drone 500.

The orientation acquisition unit 504 processes digital data output from an angular velocity sensor or the like, and calculates the rotation and the change in the orientation of the drone 500.

The distance acquisition unit 505 processes data output from a distance sensor such as a light detection and ranging (Lidar), a millimeter wave radar, and an ultrasonic sensor, and calculates the distance from the drone 500 to the surrounding environment (e.g., an obstacle). Distance information from the drone 500 to the obstacle may be calculated based on an evaluation value of focus by phase difference auto focus (AF).

### Display Format of Image

The format of the image displayed on the client apparatus 200 will be described.

The image captured by the image capturing unit 130 includes four types of images. The four types of images include a visible image (also called a "first image") captured by the first visible light image capturing unit 111, an invisible image (also called a "second image") captured by the first invisible light image capturing unit 112, a visible image (also called a "third image") captured by the second visible light image capturing unit 121, and an invisible image (also called a "fourth image") captured by the second invisible light image capturing unit 122. However, if four types of images are displayed on the display 401, the size of one image is small. Therefore, the user needs to select a desired image from among the four types of images. In the present embodiment, an example of displaying, on the display 401, one type of image (visible image (first image) or invisible image (second image)) output from the first image capturing unit 110 and one type of image (visible image (third image) or invisible image (fourth image)) output from the second image capturing unit 120 will be described. That is, two images are displayed on the display 401. The combination of the two images includes the first image and the third image (the state A described later), the first image and the fourth image (the state B described later), the second image and the third image (the state C described later), and the second image and the fourth image (the state D described later). In the present embodiment, a method of switching the image on the display 401 by the user performing switching operation of an image will be described.

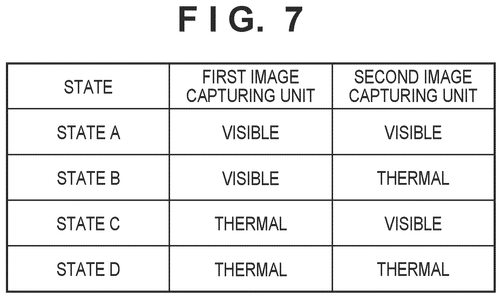

FIG. 7 is a state diagram illustrating the relationship between the output of the first image capturing unit and the output of the second image capturing unit according to the first embodiment.

The states A to D in FIG. 7 illustrate combinations of the output of the first image capturing unit 110 and the output of the second image capturing unit 120. Each of the first image capturing unit 110 and the second image capturing unit 120 outputs a visible image (illustrated by VISIBLE) or an invisible image (illustrated by THERMAL). Therefore, the display format of the image displayed on the display 401 includes the four states. Although the invisible image is described as "THERMAL", the invisible image is not limited to an image captured by the image capturing unit sensitive to infrared. The invisible image may be an image captured by an image capturing unit sensitive to ultraviolet existing outside the wavelength range of visible light.

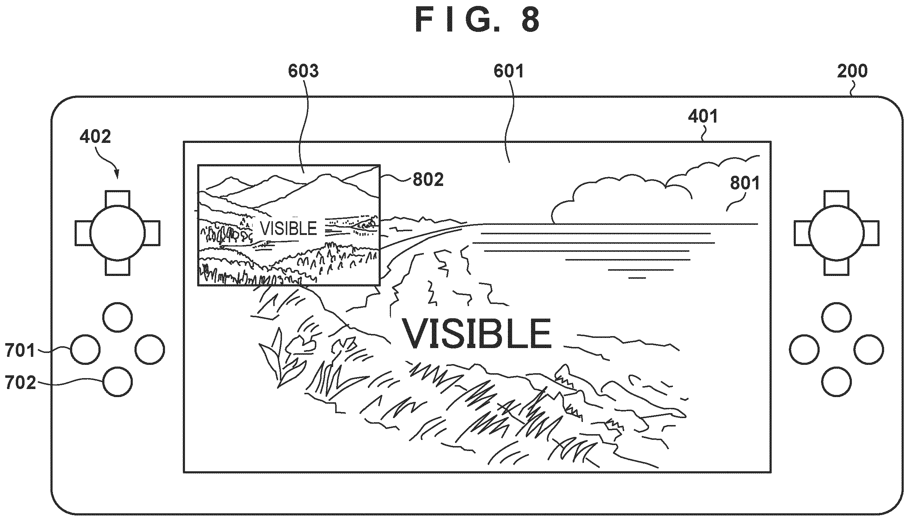

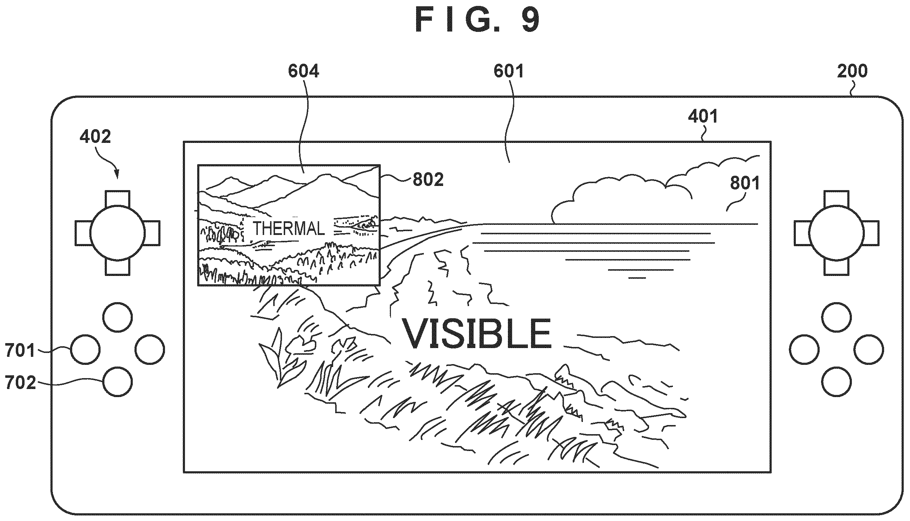

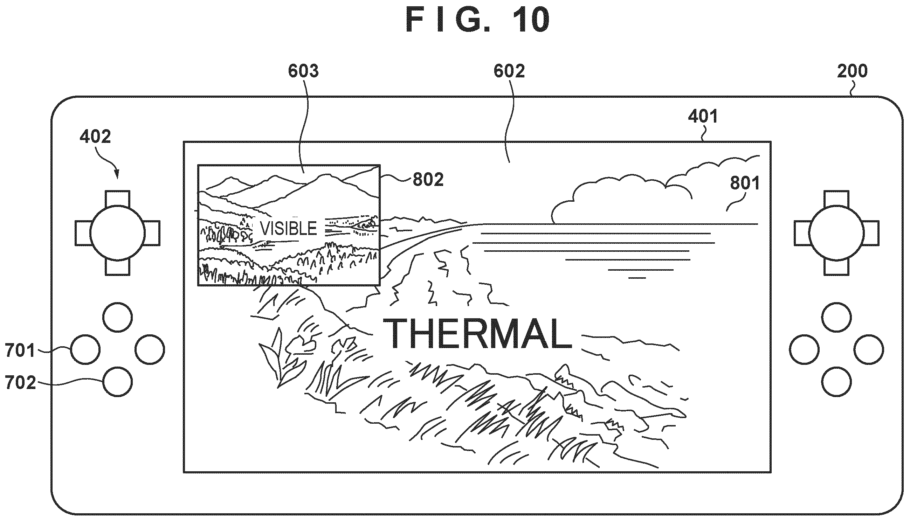

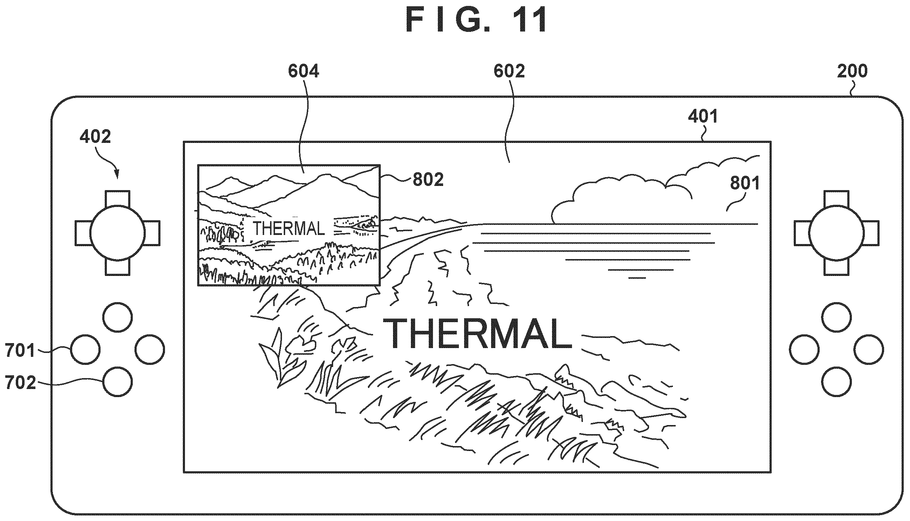

The appearance of the display 401 in the states A to D will be described with reference to FIGS. 8, 9, 10, and 11. FIG. 8 is a view illustrating an appearance of the display 401 in the state A according to the first embodiment. FIG. 9 is a view illustrating an appearance of the display 401 in the state B according to the first embodiment. FIG. 10 is a view illustrating an appearance of the display 401 in the state C according to the first embodiment. FIG. 11 is a view illustrating an appearance of the display 401 in the state D according to the first embodiment.

A first visible image 601 (first image) is an image captured by the first visible light image capturing unit 111. A first invisible image 602 (second image) is an image captured by the first invisible light image capturing unit 112. The first visible image 601 or the first invisible image 602 is displayed in the display area 801 in response to the instruction (also called the first instruction) to switch the image in the display area 801. Note that in order to clearly distinguish the visible image and the invisible image, characters VISIBLE (= visible image) or THERMAL (= invisible image) are displayed in the image in the drawing. Note that the characters VISIBLE and THERMAL in the image can be displayed or hidden at the user's option.

A second visible image 603 (third image) is an image captured by the second visible light image capturing unit 121. A second invisible image 604 (fourth image) is an image captured by the second invisible light image capturing unit 122. The second visible image 603 or the second invisible image 604 is displayed in the display area 801 in response to an instruction (also called a second instruction) to switch the image in the display area 801. Note that in order to clearly distinguish the visible image and the invisible image, characters VISIBLE (visible image) or THERMAL (invisible image) are displayed in the image in the drawing. Note that the characters VISIBLE and THERMAL in the image can be displayed or hidden at the user's option.

A display switching button 701 is a button for switching the image in the display area 801. The display switching button 701 is a first user interface (UI) with which the user inputs the first instruction. A display switching button 702 is a button for switching the image in the display area 802. The display switching button 702 is a second user interface (UI) with which the user inputs the second instruction. The user can optionally operate the display switching button 701 and the display switching button 702. Note that the user may perform the same operation as the display switching button 701 and the display switching button 702 by using, for example, the user's voice and line of sight. In the present embodiment, an example in which the display control unit 204 switches the display of an image is illustrated, but the present embodiment is not limited to this. For example, the image capturing apparatus 100 may switch image data output from each of the first image capturing unit 110 and the second image capturing unit 120. For example, the image capturing apparatus 100 transmits the output (image data) from the first visible light image capturing unit 111 or the first invisible light image capturing unit 112 and the output (image data) from the second visible light image capturing unit 121 or the second invisible light image capturing unit 122 to the client apparatus 200 based on the first instruction received from the client apparatus 200. In this manner, in a case of switching the image data output from the image capturing apparatus 100, the image capturing apparatus 100 can control the operation (specifically, output/stop of the first visible light image capturing unit 111 and the first invisible light image capturing unit 112) of the first image capturing unit 110 and the operation (specifically, output/stop of the second visible light image capturing unit 121 and the second invisible light image capturing unit 122) of the second image capturing unit 120.

### Description of Operation

The user uses the first image capturing unit 110 of the drone 500 in order to capture a wide range. The image captured by the first image capturing unit 110 is used for the user to pilot the drone 500. By confirming the image around the drone 500, the user can grasp the current position of the drone 500 and the presence or absence of an obstacle near the drone 500.

In the present embodiment, processing of switching the display of the image by the user operating the display switching button 701 in a case where the image in the display area 801 is not appropriately selected during the navigation of the drone 500 will be described. For example, in a case where the weather deteriorates (e.g., generation of fog and haze), the illuminance is insufficient, or the like in a state where first visible image 601 (first image) is displayed in the display area 801, the user switches from the first visible image 601 (first image) to the first invisible image 602 (second image) by operating the display switching button 701. At this time, visibility of the first image capturing unit 110 that performs wide angle image capturing has deteriorated due to fog and haze. Here, by switching from the second visible image 603 (third image) of the second image capturing unit 120 to the second invisible image 604 (fourth image), the visibility of the image for the user is further improved.

In a case where the type of the image (e.g., a visible image (first image)) in the display area 801 and the type of the image (e.g., a visible image (third image)) in the display area 802 are the same, the display of the first image and the third image in the display area 801 and the display area 802 is switched by the operation of the display switching button 701. Conversely, in a case where the type of the image (e.g., a visible image (first image)) in the display area 801 and the type of the image (e.g., an invisible image (fourth image)) of the image in the display area 802 are different, only the first image in the display area 801 is switched by the operation of the display switching button 701. That is, the image in the display area 802 is switched in conjunction with the switching of the image in the display area 801 by the operation of the display switching button 701. This enables the user to switch the image in the display area 802 without performing switching operation of the image in the display area 802. Therefore, the user can easily perform display switching of the plurality of images. In particular, since it is possible to reduce the workload required for switching of display of the image when the user is piloting the drone 500, the user can safely pilot the drone 500.

Advantageous effects of the configuration related to the display switching of the image will be further described. For example, when the field of view of the first image capturing unit 110 has deteriorated due to generation of fog or the like while the drone 500 is navigating, a visible distance (visibility) is shortened. Therefore, the image output from the second image capturing unit 120 capturing a more telephoto field angle than the first image capturing unit 110 indicates a situation where the field of view has deteriorated due to fog or the like. Therefore, switching of the image in the display area 801 is performed in conjunction with the switching of the image in the display area 802.

An example of switching from the visible image to the invisible image when the weather deteriorates during navigation of the drone 500 has been described, but display switching of the image described above can also be applied to the case of switching from the invisible image to the visible image. For example, in a case where the image capturing environment is improved by recovery of weather (e.g., disappearance of fog and haze), recovery of illuminance, or the like in a state where the first invisible image 602 (second image) is displayed in the display area 801, the user operates the display switching button 701. Then, the image is switched from the first invisible image 602 (second image) to the first visible image 601 (first image). By this, a color image and a high-resolution image with excellent image quality can be displayed in the display area 801, and therefore the visibility for the user is improved.

### Flowchart

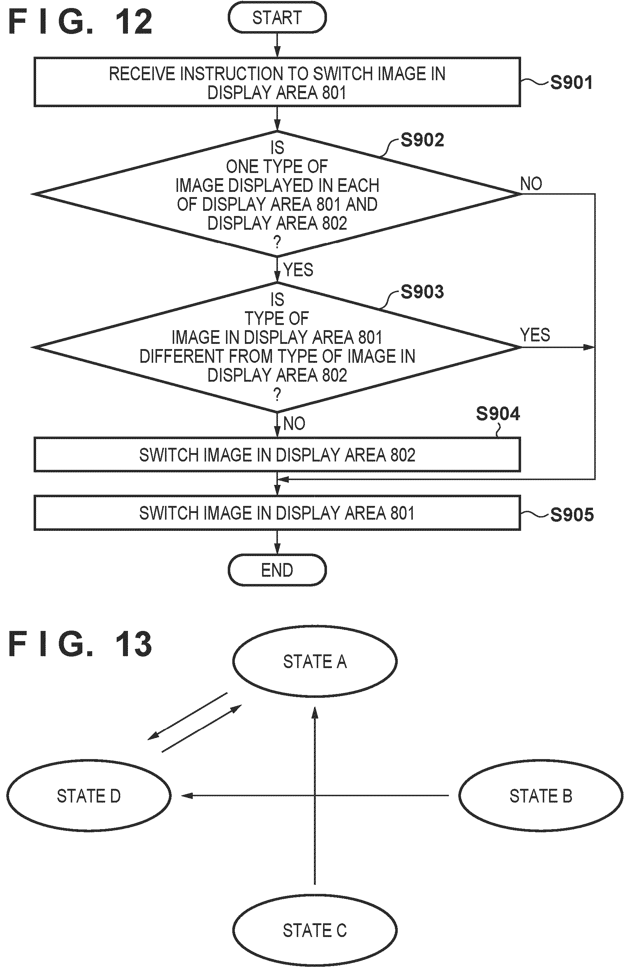

FIG. 12 is a flowchart showing the processing executed by the client apparatus according to the first embodiment. The present flowchart is implemented by the CPU 405 executing the program deployed in the RAM 406. The processing of the present flowchart will be described with reference to FIGS. 8, 9, 10, and 11.

In S901, the user inputs the instruction (also called the first instruction) to switch the image in the display area 801 (area for displaying the image output from the first image capturing unit 110). For example, by operating the display switching button 701 of the client apparatus 200, the user gives the client apparatus 200 a switching instruction in the image in the display area 801. The display control unit 204 receives the first instruction. Note that the first visible image 601 (first image) or the first invisible image 602 (second image) is displayed in the display area 801. The second visible image 603 (third image) or the second invisible image 604 (fourth image) is displayed in the display area 802.

In S902, the display control unit 204 determines whether or not one type of image is displayed in each of the display area 801 and the display area 802. In a case of determining that one type of image is not displayed in each of the display area 801 and the display area 802 (No in S902), the display control unit 204 proceeds with the processing to S905. A specific example of a case where this determination occurs is a case where two types of images (the second visible image 603 (third image) and the second invisible image 604 (fourth image)) are displayed in the display area 802. On the other hand, in a case of determining that one type of image is displayed in each of the display area 801 and the display area 802 (Yes in S902), the display control unit 204 proceeds with the processing to S903.

In S903, the display control unit 204 determines the state of the display 401. In a case of determining that the type of the image in the display area 801 is different from the type of the image in the display area 802 (Yes in S903 in a case where the state of the display 401 is the state B or the state C), the display control unit 204 proceeds with the processing to S905. Here, the state B is a state in which the first visible image 601 (first image) is displayed in the display area 801 and the second invisible image 604 (fourth image) is displayed in the display area 802. The state C is a state in which the first invisible image 602 (second image) is displayed in the display area 801 and the second visible image 603 (third image) is displayed in the display area 802. In a case of determining that the type of the image in the display area 801 is not different from the type of the image in the display area 802 (No in S903 in a case where the state of the display 401 is the state A or the state D), the display control unit 204 proceeds with the processing to S904. Here, the state A is a state in which the first visible image 601 (first image) is displayed in the display area 801 and the second visible image 603 (third image) is displayed in the display area 802. The state D is a state in which the first invisible image 602 (second image) is displayed in the display area 801 and the second invisible image 604 (fourth image) is displayed in the display area 802.

In S904, the display control unit 204 switches the image (the second visible image 603 (third image) in the state A and the second invisible image 604 (fourth image) in the state D) in the display area 802. The switching of the image is desirably performed simultaneously with the switching of the image in S905 so as not to deteriorate the visibility for the user. For example, in a case where the second visible image 603 (third image) is displayed in the display area 802, the display control unit 204 switches from the second visible image 603 (third image) to the second invisible image 604 (fourth image). In a case where the second invisible image 604 (fourth image) is displayed in the display area 802, the display control unit 204 switches from the second invisible image 604 (fourth image) to the second visible image 603 (third image).

In S905, the display control unit 204 switches the image (the first visible image 601 (first image) in the state A and first invisible image 602 (second image) in the state D) in the display area 801. For example, in a case where the first visible image 601 (first image) is displayed in the display area 801, the display control unit 204 switches from the first visible image 601 (first image) to the first invisible image 602 (second image). In a case where the first invisible image 602 (second image) is displayed in the display area 801, the display control unit 204 switches from the first invisible image 602 (second image) to the first visible image 601 (first image).

FIG. 12 describes a method of switching only the image in the display area 801 and the method of switching both the images in the display area 801 and the display area 802 according to the display format (state) of the image displayed on the display 401. In a case where the display switching button 701 is operated and images of the same type (visible image or invisible image) are displayed in the display area 801 and the display area 802, the display control unit 204 switches not only the image in the display area 801 but also the image in the display area 802. Conversely, in a case where images of different types from each other are displayed in the display area 801 and the display area 802, the display control unit 204 switches only the image in the display area 801.

### State Transition Diagram

FIG. 13 is a state transition diagram of the display according to the first embodiment.

In the state A, images of the same type (the first visible image 601 and the second visible image 603) are displayed in the display area 801 and the display area 802. Therefore, in a case where the display switching button 701 is operated, the first visible image 601 in the display area 801 is switched to the first invisible image 602. The second visible image 603 in the display area 802 is switched to the second invisible image 604. This completes the transition from the state A to the state D.

### Transition from State A to State D

▪ Display area 801: first visible image 601 (first image) → first invisible image 602 (second image)
▪ Display area 802: second visible image 603 (third image) → second invisible image 604 (fourth image)

In the state B, images of different types from each other (the first visible image 601 and the second invisible image 604) are displayed in the display area 801 and the display area 802. Therefore, in a case where the display switching button 701 is operated, the first visible image 601 in the display area 801 is switched to the first invisible image 602. This completes the transition from the state B to the state D.

### Transition from State B to State D

▪ Display area 801: first visible image 601 (first image) → first invisible image 602 (second image)
▪ Display area 802: second invisible image 604 (fourth image)

In the state C, images of different types from each other (the first invisible image 602 and the second visible image 603) are displayed in the display area 801 and the display area 802. Therefore, in a case where the display switching button 701 is operated, the first invisible image 602 in the display area 801 is switched to the first visible image 601. This completes the transition from the state C to the state A.

### Transition from State C to State A

▪ Display area 801: first invisible image 602 (second image) → first visible image 601 (first image)
▪ Display area 802: second visible image 603 (third image)

In the state D, images of the same type (the first invisible image 602 and the second invisible image 604) are displayed in the display area 801 and the display area 802. Therefore, in a case where the display switching button 701 is operated, the first invisible image 602 in the display area 801 is switched to the first visible image 601. The second invisible image 604 in the display area 802 is switched to the second visible image 603. This completes the transition from the state D to the state A.

### Transition from State D to State A

▪ Display area 801: first invisible image 602 (second image) → first visible image 601 (first image)
▪ Display area 802: second invisible image 604 (fourth image) → second visible image 603 (third image)

### Second Embodiment

In the first embodiment, a method in which the user switches the state of the display 401 by operating the display switching button 701 (also called a first user interface) is described. In the second embodiment, a method in which the user switches the state of the display 401 by operating the display switching button 702 (also called a second user interface) will be described.

The user uses the second image capturing unit 120 in order to capture a specific subject and a local range. The second image capturing unit 120 can capture a distant subject (a person, a vehicle, an animal, or the like). Therefore, the image in the display area 802 may be switched according to the specific subject and the environment of the local range that the user wants to capture. At this time, if not only the image in the display area 802 but also the image in the display area 801 are simultaneously switched, the image used by the user to pilot the drone 500 is not displayed in the display area 801. Since the user cannot pilot the drone 500 as intended by the user, there is a possibility that the drone 500 collides with a surrounding object. Therefore, in the present embodiment, in a case where the user operates the display switching button 702, only the image in the display area 802 is switched. That is, even when the image in the display area 802 is switched by the operation of the display switching button 702, the image in the display area 801 is not switched.

In this manner, in a case where the image in the display area 802 is switched, the visibility for the user for the image in the display area 801 can be prevented from deteriorating by not switching the image in the display area 801.

In the second embodiment, an example of not switching the image in the display area 801 when switching the image in the display area 802 (also called non-conjunction processing) has been described, but a condition for executing the non-conjunction processing (also called non-conjunction condition) may be provided. Hereinafter, a specific example of the non-conjunction condition will be described.

In the first method, the display control unit 204 determines whether or not the non-conjunction condition is satisfied based on the imaging region of each of the first image capturing unit 110 and the second image capturing unit 120. In a case where the image direction and the imaging region of the first image capturing unit 110 are different from the image direction and the imaging region of the second image capturing unit 120, the subject and the environment captured by the first image capturing unit 110 are different from the subject and the environment captured by the second image capturing unit 120. In this case, the display control unit 204 determines that the non-conjunction condition is satisfied and executes the non-conjunction processing. For example, in a case where the first image capturing unit 110 captures the front of the drone 500, and the second image capturing unit 120 is capturing immediately below or the rear of the drone 500, the display control unit 204 executes the non-conjunction processing.

In the second method, the display control unit 204 determines whether or not the non-conjunction condition is satisfied based on the focal length of each of the first image capturing unit 110 and the second image capturing unit 120. In a case where the focal length (zoom magnification/imaging range) of the first image capturing unit 110 is different from the focal length of the second image capturing unit 120, the subject and the environment captured by the first image capturing unit 110 are different from the subject and the environment captured by the second image capturing unit 120. In this case, the display control unit 204 determines that the non-conjunction condition is satisfied and executes the non-conjunction processing. For example, in a case where the focal length of the first image capturing unit 110 is 16 mm and the focal length of the second image capturing unit 120 is 600 mm (i.e., a case where the difference between the focal length of the first image capturing unit 110 and the focal length of the second image capturing unit 120 is large), the display control unit 204 executes the non-conjunction processing. Regarding the focal length when determining whether or not the non-conjunction condition is satisfied, in a case where the sizes of the imaging elements of the first image capturing unit 110 and the second image capturing unit 120 are different, it is desirable to calculate the focal lengths of the first image capturing unit 110 and the second image capturing unit 120 by correction such as full size (35 mm) conversion.

In the third method, the display control unit 204 determines whether or not the non-conjunction condition is satisfied based on the evaluation value of the image of each of the first image capturing unit 110 and the second image capturing unit 120. In a case where the difference between the evaluation value (brightness and contrast) of the image captured by the first image capturing unit 110 and the evaluation value (brightness and contrast) of the image captured by the second image capturing unit 120 is large, the subject and the environment captured by the first image capturing unit 110 are different from the subject and the environment of the second image capturing unit 120. In this case, the display control unit 204 determines that the non-conjunction condition is satisfied and executes the non-conjunction processing. For example, in a case where the illuminance of the image captured by the second image capturing unit 120 is insufficient and the illuminance of the image captured by the first image capturing unit 110 is sufficient, the display control unit 204 executes the non-conjunction processing.

In the fourth method, the display control unit 204 determines whether or not the non-conjunction condition is satisfied based on the result of the image analysis of each of the first image capturing unit 110 and the second image capturing unit 120. The subject is determined by performing image processing on the respective captured images of the first image capturing unit 110 and the second image capturing unit 120. In a case where the difference between the result of determining the subject in the captured image of the first image capturing unit 110 and the result of determining the subject in the captured image of the second image capturing unit 120 is large, the subject and the environment captured by the first image capturing unit 110 are different from the subject and the environment of the second image capturing unit 120. In this case, the display control unit 204 determines that the non-conjunction condition is satisfied and executes the non-conjunction processing. For example, in a case where a person is detected in the captured image of the second image capturing unit 120 and a person is not detected in the captured image of the first image capturing unit 110, the display control unit 204 executes the non-conjunction processing.

### Flowchart

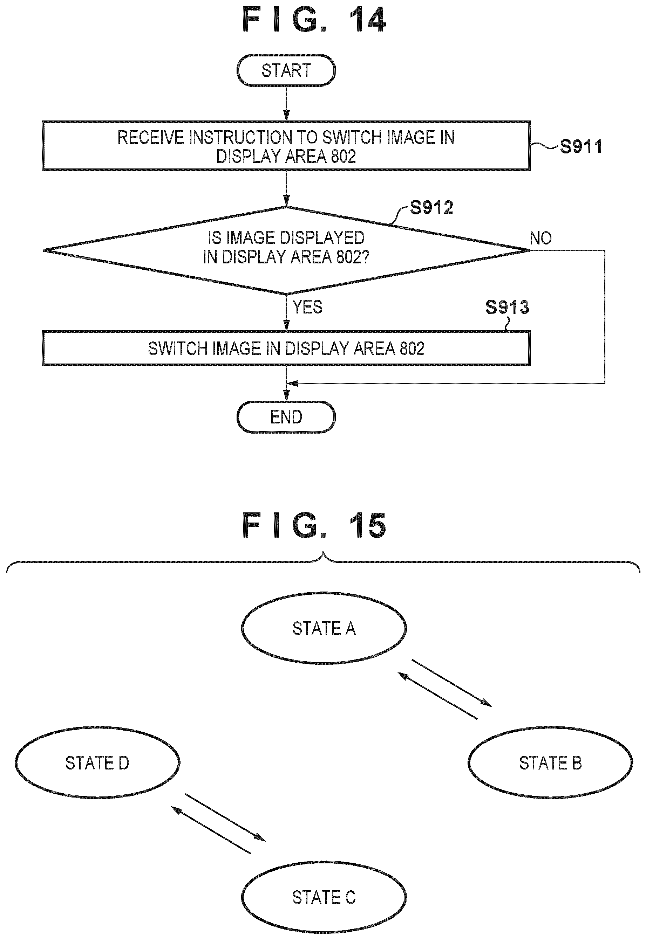

FIG. 14 is a flowchart showing the processing executed by the client apparatus according to the second embodiment. The present flowchart is implemented by the CPU 405 executing the program deployed in the RAM 406. The processing of the present flowchart will be described with reference to FIGS. 8, 9, 10, and 11.

In S911, the user inputs the instruction (also called the second instruction) to switch the image in the display area 802 (area for displaying the image output from the second image capturing unit 120). For example, by operating the display switching button 702 of the client apparatus 200, the user gives the client apparatus 200 a switching instruction in the image in the display area 802. The display control unit 204 receives the second instruction.

In S912, the display control unit 204 determines the state of the display 401. The display control unit 204 determines whether or not an image captured by the second image capturing unit 120 is displayed in the display area 802. In a case of determining that the image captured by the second image capturing unit 120 is not displayed in the display area 802 (No in S912), the display control unit 204 ends the processing because there is no image to be switched. In a case of determining that the image captured by the second image capturing unit 120 is displayed in the display area 802 (Yes in S912), the display control unit 204 proceeds with the processing to S913.

In S913, the display control unit 204 switches the image in the display area 802. Note that the image in the display area 801 is not switched in the processing of FIG. 12, but the present disclosure is not limited to this. For example, when the non-conjunction condition described above is not satisfied, the image in the display area 801 may be switched.

### State Transition Diagram

FIG. 15 is a state transition diagram of the display according to the second embodiment.

In the state A, the second visible image 603 is displayed in the display area 802. Therefore, in a case where the display switching button 702 is operated, the second visible image 603 in the display area 802 is switched to the second invisible image 604. This completes the transition from the state A to the state B.

### Transition from State A to State B

▪ Display area 801: first visible image 601 (first image)
▪ Display area 802: second visible image 603 (third image) → second invisible image 604 (fourth image)

In the state B, the second invisible image 604 is displayed in the display area 802. Therefore, in a case where the display switching button 702 is operated, the second invisible image 604 in the display area 802 is switched to the second visible image 603. This completes the transition from the state B to the state A.

### Transition from State B to State A

▪ Display area 801: first visible image 601 (first image)
▪ Display area 802: second invisible image 604 (fourth image) → second visible image 603 (third image)

In the state C, the second visible image 603 is displayed in the display area 802. Therefore, in a case where the display switching button 702 is operated, the second visible image 603 in the display area 802 is switched to the second invisible image 604. This completes the transition from the state C to the state D.

### Transition from State C to State D

▪ Display area 801: first invisible image 602 (second image)
▪ Display area 802: second visible image 603 (third image) → second invisible image 604 (fourth image)

In the state D, the second invisible image 604 is displayed in the display area 802. Therefore, in a case where the display switching button 702 is operated, the second invisible image 604 in the display area 802 is switched to the second visible image 603. This completes the transition from the state D to the state C.

### Transition from State D to State C

▪ Display area 801: first invisible image 602 (second image)
▪ Display area 802: second invisible image 604 (fourth image) → second visible image 603 (third image)

### Third Embodiment

In the first embodiment, a method in which the user switches the first image (or the second image) in the display area 801 and switches, in conjunction with this switching instruction, the third image (or the fourth image) in the display area 802 has been described. In the second embodiment, a method in which the user switches only the third image or the fourth image in the display area 802 has been described. However, the image capturing system 10 may switch the images described in the first and second embodiments. For example, the image capturing system 10 may determine whether or not to execute switching of the first image (or the second image) based on the brightness of the first image (or the second image) captured by the first image capturing unit 110. For example, in a case where the brightness of the first visible image 601 (first image) is sufficient, the image capturing system 10 displays the first visible image 601 (first image). Conversely, in a case where the brightness of the first visible image 601 (first image) is not sufficient, the image capturing system 10 displays the first invisible image 602 (second image). The image capturing system 10 may determine whether or not to execute switching of the image based on the position information obtained from the position acquisition unit 502 and the weather information acquired by communicating with an external device. The image capturing system 10 may determine whether or not to execute switching of the image based on the current time of day. For example, in a case where the time of day is daytime, the image capturing system 10 displays the first visible image 601 (first image). In a case where the time of day is nighttime, the image capturing system 10 displays the first invisible image 602 (second image).

In a case of switching the image in the display area 801 (in the case of the state A or the state D) based on the above-described determination condition executed by the image capturing system 10 without a switching instruction to the image by the user, the image capturing system 10 switches not only the image in the display area 801 but also the image in the display area 802, similarly to the first embodiment. In a case of switching the image in the display area 801 (in the case of the state B or the state C), the image capturing system 10 switches only the image in the display area 801, similarly to the first embodiment.

In a case of switching the image in the display area 802 based on the above-described determination condition executed by the image capturing system 10 without a switching instruction to the image by the user, the image capturing system 10 switches only the image in the display area 802, similarly to the second embodiment. The above determination condition can also be applied to a case of switching the image in the display area 802.

### Fourth Embodiment

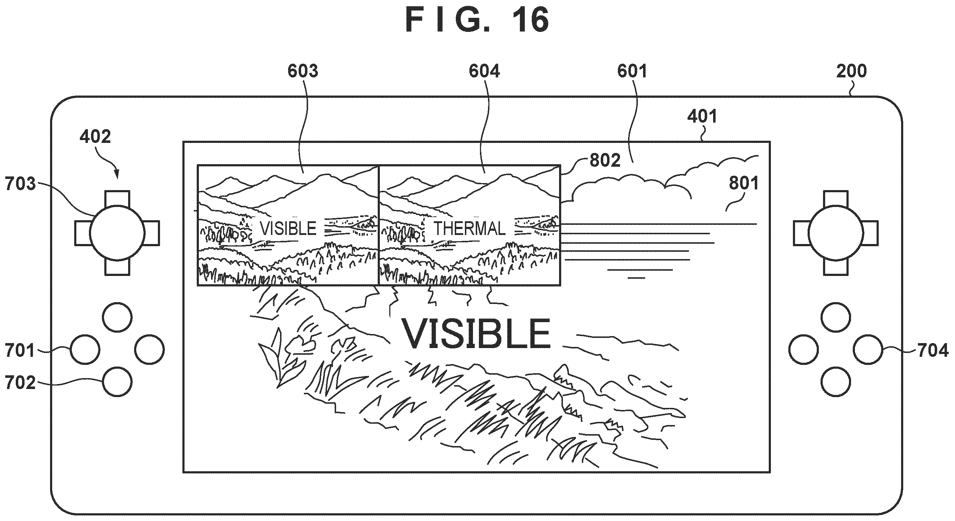

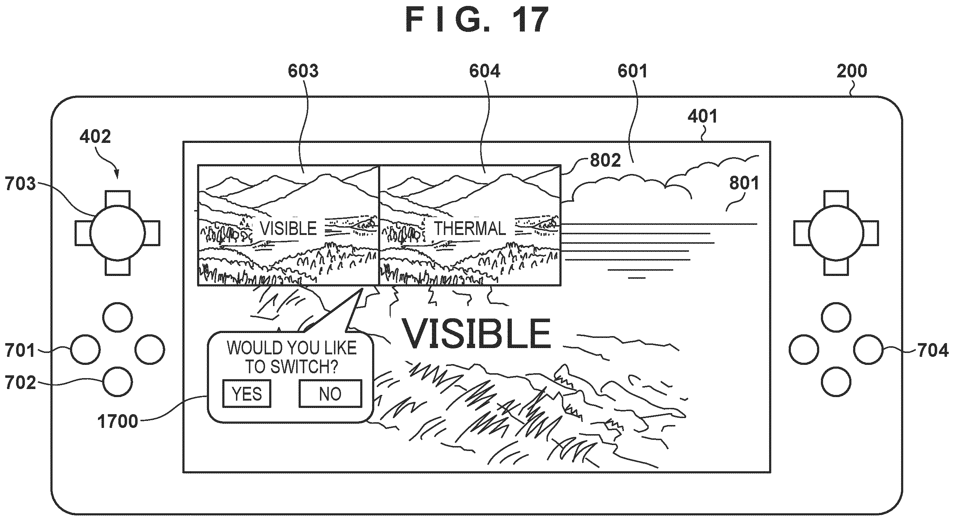

In the first and third embodiments, the third image (or the fourth image) in the display area (e.g., the display area 802) not intended by the user may be switched. Therefore, a method of notifying the user that the third image (or the fourth image) in the display area 802 is switched when the third image (or the fourth image) in the display area 802 is switched will be described with reference to FIGS. 16 and 17.

FIG. 16 is an example of simultaneously displaying two types of images in the display area 802 according to the fourth embodiment.

FIG. 16 illustrates transition from the state D to the state A after the user operates the display switching button 701. At this time, since the user performs an operation of switching from the second image to the first image in the display area 801, the switching to the first image in the display area 801 is an intentional operation by the user. On the other hand, the switching from the fourth image to the third image in the display area 802 is an operation not intended by the user. Here, the user sometimes wants the switching from the fourth image to the third image in the display area 802 not to be suddenly executed. Therefore, as illustrated in FIG. 16, after the display switching button 701 is operated, two types of images (the second visible image 603 (third image) and the second invisible image 604 (fourth image)) are simultaneously displayed in the display area 802 for a certain period of time (e.g., several seconds).

By this, the user does not lose sight of the subject at the time of switching from the fourth image to the third image in the display area 802. A supplementary description about a possibility that the user loses sight of the subject when the fourth image in the display area 802 is suddenly switched will be given. Since the visible image and the invisible image have different views of the subject by the user, when the type of the image in the display area 802 is suddenly switched, the views of the background (landscape) and the person being captured are changed. Simultaneously displaying the second visible image 603 (third image) and the second invisible image 604 (fourth image) in the display area 802 enables the user to compare the visible image with the invisible image, and thus the user does not lose sight of the subject. In the present embodiment, a case of operating the display switching button 701 described in the first embodiment will be described, but as described in the third embodiment, a method in which the image capturing system 10 switches the image may be applied to the present embodiment.

FIG. 17 is a view illustrating the user interface for switching the image in the display area 802 according to the fourth embodiment.

FIG. 17 illustrates a user interface 1700 for switching the image in the display area 802. The user interface 1700 includes a first option (illustrated with "Yes") to decide switching the fourth image in the display area 802 and a second option (illustrated with "No") to cancel switching the fourth image in the display area 802. The user interface 1700 is the third user interface with which the user can input at least any of the first option and the second option. The third user interface can be displayed, for example, after the user operates the display switching button 701. By operating an operating stick 703 and a decision button 704, the user can execute the first option or the second option on the user interface 1700. This enables the user to switch the image in the display area 802 to an image as intended by the user. In FIG. 17, in a case where "Yes" is selected, the state transitions from the state D to the state A. That is, the fourth image in the display area 802 is switched to the third image. On the other hand, in a case where "No" is selected, the state transitions from the state D to the state B. That is, the fourth image in the display area 802 is not switched.

Although FIG. 17 illustrates an example in which both "Yes" and" No" are displayed on the user interface 1700, only one of "Yes" and" No" may be displayed on the user interface 1700. For example, in a case where after only "Yes" is displayed on the user interface 1700, "Yes" is not selected for a certain period of time, the state transitions from state D to state B without performing switching of the fourth image in the display area 802. On the other hand, in a case where after only "No" is displayed on the user interface 1700, "No" is not selected for the certain period of time, the state transitions from state D to state A with performing switching of the fourth image in the display area 802.

As described in the third embodiment, in a case where the image capturing system 10 performs switching of the image in the display area 801, two types of images (i.e., the first image and the second image) may be displayed in the display area 801. The fourth user interface (not illustrated) for selecting whether or not to switch the image (i.e., the first image or the second image) in the display area 801 may be displayed.

### Supplement

Although it has been described that the display switching button 701 and the display switching button 702 are buttons configured by hardware, they may be graphical user interfaces (GUI). The display unit 203, the control unit 201, and the operation input unit 205 need not have an integrated configuration. The processing of each of the above embodiments may be executed by operating a GUI displayed on a monitor connected to a PC using a mouse, a keyboard, or the like.

As a method of switching the images in the display area 801 and the display area 802, an example in which the user selects the image to be displayed on the client apparatus 200 has been described, but the image capturing apparatus 100 may switch the output of the image by controlling the output of the first image capturing unit 110 and the second image capturing unit 120.

In a case of switching the images in the display area 801 and the display area 802, it is desirable to align the field angles of the images before and after the switching. By aligning the field angles of the images before and after the switching, the user can view the image having the same field angle even if the image is switched, and therefore the subject is hardly lost. Therefore, in a case where the switching operation of the image is performed, the focal length of the image capturing unit capturing the image after the switching is adjusted by driving the zoom lens of the image capturing unit capturing the image before the switching. The field angles of the images before and after the switching may be aligned by digital zoom.

Any one of the visible image and the invisible image may be a composite image in which the visible image and the invisible image are composited. However, the visible image and the invisible image are images sensitive to different wavelengths from each other.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

## Claims

1. A control apparatus comprising:
a display means (203) configured to display a first image or a second image output from a first image capturing means (110) including a first visible light image capturing means (111) and a first invisible light image capturing means (112), and a third image or a fourth image output from a second image capturing means (120) including a second visible light image capturing means (121) and a second invisible light image capturing means (122); and
a display control means (204) configured to switch from the first image to the second image and switching from the third image to the fourth image different from the third image based on a first instruction to switch from the first image to the second image different from the first image in a case where the first image and the third image are displayed.

2. The control apparatus according to claim 1, wherein
the display control means does not switch from the first image to the second image but switches from the third image to the fourth image based on a second instruction to switch from the third image to the fourth image in a case where the first image and the third image are displayed.

3. The control apparatus according to claim 2, wherein
the display control means determines whether or not to execute not switching from the first image to the second image but switching from the third image to the fourth image based on at least any of an imaging region and/or a focal length of each of the first image capturing means and the second image capturing means, an evaluation value and/or a result of image analysis of each of the first image and the third image.

4. The control apparatus according to claim 1 comprising
a first user interface for inputting the first instruction.

5. The control apparatus according to claim 2 comprising
a second user interface for inputting the second instruction.

6. The control apparatus according to claim 1, wherein
the first image capturing means and the second image capturing means are attached to a moving body.

7. The control apparatus according to claim 6, wherein
the moving body is any of a drone, an aircraft, a ship, and a vehicle.

8. The control apparatus according to claim 1, wherein
the first image capturing means captures a wider angle than the second image capturing means.

9. The control apparatus according to claim 6, wherein
the first image capturing means is fixed to a front surface of the moving body.

10. The control apparatus according to claim 1, wherein
the second image capturing means performs pan and tilt drive.

11. The control apparatus according to claim 1 comprising
a third user interface for inputting at least any of an instruction to execute switching from the third image to the fourth image and an instruction not to execute switching from the third image to the fourth image, wherein
the third user interface is displayed after the first instruction is received.

12. The control apparatus according to claim 11, wherein
the display control means displays the third image and the fourth image based on the first instruction.

13. The control apparatus according to claim 1, wherein
the first invisible light image capturing means and the second invisible light image capturing means are image capturing means sensitive to at least any of near-infrared, mid-infrared, far-infrared, and ultraviolet.

14. The control apparatus according to claim 1, wherein
the display control means switches from the first image to the second image and switches from the third image to the fourth image based on brightness of the first image.

15. The control apparatus according to claim 1, wherein
the display control means does not switch from the first image to the second image but switches from the third image to the fourth image based on brightness of the third image.

16. The control apparatus according to claim 1, wherein
the first image and the third image are visible images, and the second image and the fourth image are invisible images, or
the first image and the third image are invisible images, and the second image and the fourth image are visible images.

17. A control method comprising:
displaying a first image or a second image output from a first image capturing means including a first visible light image capturing means and a first invisible light image capturing means, and a third image or a fourth image output from a second image capturing means including a second visible light image capturing means and a second invisible light image capturing means; and
controlling to switch from the first image to the second image and switching from the third image to the fourth image different from the third image based on a first instruction to switch from the first image to the second image different from the first image in a case where the first image and the third image are displayed.

18. A computer program comprising instructions which, when the program is executed by a computer, cause the computer to carry out the method of claim 17.
